# EUROPEAN PATENT APPLICATION

(11) **EP 4 625 068 A1**
(43) Date of publication of application: **01.10.2025**
(21) Application number: 24870422.3
(22) Date of filing: 06.09.2024
(51) Int. Cl.: G05B 9/03

(54) **VALUE-TAKING ANALYSIS METHOD FOR DEFAULT VALUE OF SIGNAL OF NUCLEAR POWER STATION CONTROL SYSTEM, AND TERMINAL DEVICE**

(30) Priority: 20.03.2024 CN 202410327371
(71) Applicant: China Nuclear Power Design Company Ltd. (Shenzhen), Shenzhen, Guangdong 518100 (CN); China Nuclear Power Engineering Co., Ltd., Shenzhen, Guangdong 518124 (CN)
(72) Inventor: ZHAO, Hongbin, Shenzhen, Guangdong 518124 (CN); LIU, Zhiyong, Shenzhen, Guangdong 518124 (CN); XING, Kunpeng, Shenzhen, Guangdong 518124 (CN)
(74) Representative: Westphal, Mussgnug & Partner, Patentanwälte mbB
(86) International application number: PCT/CN2024/117605
(87) International publication number: WO 2025/066876

(57) **Abstract**

A method for determining a default value of signal of nuclear power plant control system, and a terminal equipment. The method comprises: acquiring at least one preset default value of a target signal, and failure-association data capable of representing an action correspondingly executed by a control system after the target signal fails (S10); performing impact analysis on each preset default value according to the failure-association data to obtain a detection difficulty score, an impact severity score and a redundancy degree score (S20); determining a total score corresponding to each preset default value according to the detection difficultly score. The impact severity score and the redundancy degree score corresponding to each preset default value, and determining a configurable default value of the target signal according to all the total scores and (S30). The value-taking analysis method and the terminal equipment can help a worker to rationally evaluate the rationality of each preset default value of a control signal. And recommend the most rational preset default value to the worker as a recommended value of default value.

## Description

### TECHNICAL FIELD

The present invention relates to the technical field of nuclear power plants, and in particular, to a method for determining a default value of signal of nuclear power plant control system, and a terminal equipment.

### DESCRIPTION OF RELATED ART

Currently, the analysis and determination of default values for failed signals in nuclear power control systems primarily rely on manual assessment by design personnel, where the evaluation of signal failure impacts and subsequent default value assignment depend substantially on subjective judgment based on individual experience and technical competence. This conventional approach suffers from inherent limitations including incomplete consideration of failure scenarios, absence of systematic default value analysis, and general omission of comprehensive comparison among all potential default value options. Furthermore, the tendency of personnel to introduce cognitive bias by preferentially assuming their desired default values frequently leads to erroneous judgments and inappropriate value assignments, resulting in suboptimal or incorrect configurations.

In the related art, the analysis of default values lacks refined and easily executable methodologies for value determination. Designers from different disciplines typically consider varying scopes, depths, and bases of evaluation factors during their analysis. Furthermore, the guidance provided to personnel regarding default value selection remains relatively broad and lacks operational feasibility, while the criteria for value determination are inconsistent. These deficiencies frequently result in the assignment of unreasonable or suboptimal default values for certain signals.

### BRIEF SUMMARY OF THE INVENTION

The technical problem to be solved by the present invention is to provide a method for determining a default value of signal of nuclear power plant control system, and a terminal equipment.

The technical solution adopted by the present invention to solve the technical problem is to construct a method for determining a default value of signal of nuclear power plant control system, which comprises:
S10: acquiring at least one preset default value of a target signal and failure associated data capable of representing an action corresponding executed by the control system when the target signal fails ;
S20: performing impact analysis processing on each preset default value according to the failure associated data to obtain a detection difficulty score, an impact severity score and a redundancy degree score; wherein the detection difficulty score, the impact severity score and the redundancy degree score respectively represent the detection difficulty of the target signal upon failure, the impact severity on the control system and substitutability degree;
S30: determining a total score corresponding to each preset default value according to the detection difficulty score, the impact severity score, and the redundancy degree score corresponding to each preset default value, and determining a configurable default value for the target signal according to all the total scores.

Preferably, the failure associated data comprises an alarm function list, a function impact list, and a redundancy replacement list; The alarm function list comprises a plurality of alarm function types each triggered based on an associated default value, the function impact list comprises a plurality of function control types each executed based on an associated default value, and the redundancy replacement list comprises a plurality of redundancy replacement types each triggered based on a relevant default value; Performing impact analysis processing on each preset default value according to the failure associated data comprises: upon each determination of the default value of the target signal as a preset default value, performing the following steps, S201, determining an alarm function type triggered by the target signal upon failure based on a currently set default value and an alarm function list, so as to determine the detection difficulty score according to all triggered alarm function types.S202, determining a function control type triggered by the target signal upon failure based on a currently set default value and a function impact list, so as to determine the impact severity score according to all the triggered function control types; S203: determining a redundancy replacement type triggered by the target signal upon failure based on a currently set default value and a redundancy replacement list, so as to determine a redundancy degree score according to all triggered redundancy replacement types.

Preferably, the alarm function types comprise process alarm, control equipment alarm, local failure alarm and failure auxiliary determination; the process alarm comprises a plurality of types of sub-process alarm functions and a plurality of first score values respectively corresponding to different types of sub-process alarm functions when the sub-process alarm function is triggered or not triggered; The control equipment alarm comprises a plurality of types of sub-control equipment alarm functions and a plurality of second score values respectively corresponding to different types of sub-control equipment alarm functions after being triggered, and the local failure alarm comprises a plurality of types of local failure alarm functions and a plurality of third scores respectively corresponding to different types of local failure alarm functions after being triggered; The failure auxiliary determinations comprises a plurality of types of sub-failure auxiliary determination functions and a plurality of fourth score values respectively corresponding to different types of sub-failure auxiliary failure determination functions after being triggered.

Preferably, determine the detection difficulty score according to all the triggered alarm function types comprises: calculating a total score of all the triggered alarm function types according to all the trigger alarm function types and their corresponding scores; recording as the total alarm function score; Correcting the total alarm function score as follows: adding a first correction value to the total alarm function score if the number of triggered alarm function types is two; adding a second correction value to the total alarm function score if the number of triggered alarm function types is three or more; adding a third correction value to the total alarm function score if the degree of process alarm is a first safety degree; adding a fourth correction value to the total alarm function score if the preset safety degree of the process alarm is a second safety degree; and adding a first preset standard score to the corrected total alarm function score to obtain a first calculation result, judging whether the first calculation result is lower than 0, if so, setting the detection difficulty score to 0, otherwise, setting the detection difficulty score to the first calculation result.

Preferably, the types of each sub-process alarm function comprise main control operation screen alarm and main control auxiliary & backup panel alarm; the types of each sub-control equipment alarm function comprise instrument control alarm and parameter fault display; the types of each sub-local failure alarm function comprise audible and visual alarm, audible alarm and visual alarm; the types of each sub-failure auxiliary determination function comprise auxiliary determination by redundant instrument, auxiliary determination by other type of instrument or parameter, and auxiliary determination by both redundant instrument and other type of instrument or parameter .

Preferably, in S201, correcting the total alarm function score further comprises: determining a fifth correction value according to a preset alarm degree of the main control operation screen alarm if the main control operation screen alarm is triggered, and adding the fifth correction value to the total alarm function score; determining a sixth correction value according to a preset alarm degree of the main control auxiliary & backup panel alarm if the main control auxiliary & backup panel alarm is triggered , and adding the sixth correction value to the total alarm function score.

Preferably, the types of the function control type comprise loss of function category, function-replacement category, operational-technical-specification category, and unit-impact category; the loss of function category comprises a plurality of types of sub-loss of function categories and a plurality of fifth score values respectively corresponding to each sub-loss of function category when triggered; The function-replacement category comprises a plurality of types of sub-function-replacement category categories and a plurality of sixth score values respectively corresponding to the sub-function-replacement category categories when different preset replacement types are triggered, wherein the preset replacement types comprise full replacement, partial replacement, automatic replacement and manual replacement; The operational-technical-specification category comprises a plurality of types of sub-operational-technical-specification categories and a plurality of seventh score values respectively corresponding to the sub-operational-technical-specification categories based on duration of impact when triggered; and the unit-impact category comprises a plurality of types of sub-unit-impact categories and a plurality of eighth score values respectively corresponding to different sub-unit-impact category categories when triggered.

Preferably, the type of each the sub-loss of function category comprises loss of monitoring function, loss of alarm function, and loss of actuator control function; the type of each sub-function-replacement category comprises monitoring function-replacement, alarm function-replacement, and actuator function replacement; the type of each sub-operational-technical-specification category comprises repair/operation mode, withdrawal mode, and reactor trip mode; The type of each unit-impact sub-category comprises prohibition of long-term full-power operation, high unit trip risk and high reactor trip risk.

Preferably, determining the impact severity score according to all the triggered function control types comprises: calculating the total score of all triggered function control types according to each triggered function control type and its predefined score mapping, and recording the total score as the total functional control score; judging whether the total functional control score is lower than 0, and if so, setting the impact severity score to 0; judging whether total functional control score is not lower than 0 and not higher than a second preset standard score, if so, setting the impact severity score to the total functional control score and judging whether the total functional control score is higher than the second preset standard score, if so, setting the impact severity score to the second default standard score.

Preferably, calculating the total score of all triggered function control types according to each triggered function control type and its predefined score mapping comprises: determining the sum of the fifth score values based on each triggered sub-loss of function category; determining the sum of the sixth score values based on each triggered sub-function-replacement category and a corresponding preset replacement type; determining the sum of the seventh score values based on each triggered sub-operational-technical-specification category and a corresponding impact duration; determining the sum of the eighth score values based on each triggered sub-unit-impact category; and calculating the sum of the fifth score values, the sum of the sixth score values, the sum of the seventh score values and the sum of the eighth score values to obtain the total score of the function control type.

Preferably, the types of the redundancy replacement type comprises redundancy category, redundancy replacement degree, analogous redundancy category, and analogous redundancy replacement degree; the redundancy category comprises a plurality of types of sub-redundancy categories and a plurality of ninth score values respectively corresponding to each sub-redundancy category when different redundancy replacement forms are triggered; the redundancy replacement forms comprise in-column replacement and cross-column replacement; The redundancy replacement degree comprises a plurality of types of sub-redundancy replacement degrees respectively corresponding to each sub-redundancy category one by one, and a plurality of tenth score values corresponding to different sub-redundancy categories and sub-redundancy replacement degrees when being triggered; The analogous redundancy category comprises a plurality of types of sub-analogous redundancy categories and a plurality of eleventh score values respectively corresponding to the sub-analogous redundancy categories when different redundancy replacement forms are triggered; The analogous redundancy replacement degree comprises a plurality of types of sub-analogous redundancy replacement degrees corresponding to each sub-analogous redundancy category one by one, and a plurality of twelfth score values corresponding to different sub-analogous redundancy categories and the sub-analogous redundancy replacement degrees respectively when being triggered.

Preferably, determining the redundancy degree score according to all the triggered redundancy replacement types comprises: calculating the total score of all the triggered redundancy replacement types according to each triggered redundancy replacement type and its predefined score mapping, recorded as the total redundancy degree score; Correcting the total redundancy degree score as follows: adding a seventh correction value to the total redundancy degree score if the number of triggered redundancy categories is two; adding an eighth correction value to the total redundancy degree score if the number of triggered redundancy categories is three or more; And adding a third preset standard score to the corrected total redundancy degree score to obtain a third calculation result, judging whether the third calculation result is lower than 0, if so, setting the redundancy degree score to 0, and otherwise, setting the redundancy degree score to the third calculation result.

Preferably, determining a configurable default value of a target signal according to all the total scores comprises: performing conservativeness assessment for each total score to obtain a conservativeness analysis result corresponding to each total score; determining a preset conservativeness type according to the preset default value corresponding to the total score; If the preset conservativeness type corresponding to the preset default value is consistent with the conservativeness analysis result of the corresponding total score, determining that the preset default value is valid and taking the preset default value as the configurable default value; the conservativeness analysis result comprises being classified as conservative, intermediate, or non-conservative; and the preset conservativeness type comprises conservative, intermediate and non-conservative.

Preferably, the method further comprises: if the number of configurable default values is more than 1, respectively calculating a score difference between the total score corresponding to each configurable default value and the middle value of the interval to which the configurable default value belongs, and taking the configurable default value corresponding to the minimum score difference as an optimal default value.

The present invention also provides a terminal equipment, comprising a memory, a processor, and a computer program stored in the memory and operable on the processor, wherein the processor is configured to, when executing the computer program, perform the method for determining a default value of signal of nuclear power plant control system according to the above.

The implementation of the present invention has the following beneficial effects: the present invention can help the operator to reasonably evaluate the rationality of each preset default value of the control signal, and recommend the most reasonable preset default value as the recommended default value to the operator, thereby significantly enhancing the safety and reliability of the nuclear power plant.

### BRIEF DESCRIPTION OF THE A PLURALITY OF VIEWS OF THE DRAWINGS

The present invention will be further described with reference to the accompanying drawings and embodiments, in which:
FIG. 1 is a flow chart of a method for determining a default value of signal of nuclear power plant control system according to some embodiments of the present invention;
FIG. 2 is a schematic diagram of the design of each sub-type in an alarm function type and the associated score in some embodiments of the present invention;
FIG. 3 is a schematic diagram of the design of each sub-type in a function control type and associated scores in some embodiments of the present invention;
FIG. 4 is a schematic diagram of that design of each sub-type in a redundancy replacement type and associated score in some embodiments of the present invention.

### DETAILED DESCRIPTION OF THE INVENTION

For a clearer understanding of the technical features, objects, and effects of the present invention, embodiments of the present invention will now be described in detail with reference to the accompanying drawings.

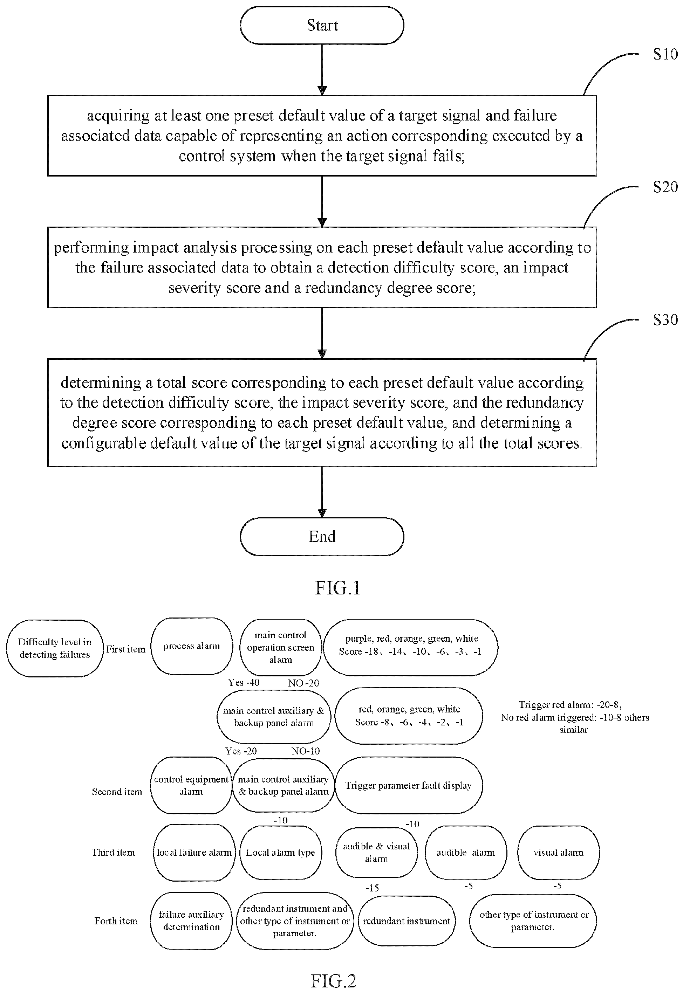

The present invention provides a program flow chart of a method for determining a default value of signal of nuclear power plant control system. The implementation of the method can help operators to reasonably select the default values of control signals of the nuclear power plant control system (such as a digital control system and a reactor coolant system).As shown in FIG. 1, the method comprises step S10, step S20, and step S30. It should be noted that the types of control signals comprise digital signals and analog signals. For the convenience of understanding and description, the following embodiments are described by taking digital signals as examples. It should be understood that the present invention does not specifically limit the types of control signals.

Step S10 comprises: acquiring at least one preset default value of a target signal and failure associated data capable of representing an action corresponding executed by a control system when the target signal fails. In this step, the target signal is a certain control signal in the control system of the nuclear power plant, and the type of the control signal can be a digital signal or an analog signal, such as a digital signal. The preset default value can be "1", "0" or the latest valid value. Therefore, a plurality of preset default values can be set for comparison so as to select a valid default value.

In some embodiments, the failure associated data may comprise an alarm function list, a function impact list, and a redundancy replacement list. The alarm functions list comprises a plurality of alarm function types each triggered based on an associated default value. As shown in FIG. 2, the types of alarm function type may comprise process alarm, control equipment alarm, local failure alarm, and failure auxiliary determination.

As shown in FIG. 2, the process alarm may comprise a plurality of types of sub-process alarm functions and a plurality of first score values respectively corresponding to different types of sub-process alarm functions when they are triggered and not triggered, respectively. The types of each sub-process alarm function may comprise main control operation screen alarm and main control auxiliary & backup panel alarm. Specifically, a first score value may be determined according to the alarm effectiveness (i.e., the monitored difficulty) of each sub-process alarm function, and when each sub-process alarm function is triggered or not triggered, the corresponding first score values may be different, for example, when the main control operation screen alarm is triggered, the first score value is -40 points. When the auxiliary control & backup panel alarm is triggered, the first score value is -20 points. It will be appreciated that the effects of the control signal being set to a different default value may be evaluated based on the score.

In the related art, when the main control operation screen alarm or the main control auxiliary & backup panel alarm is triggered in the nuclear power plant, the severity of the alarm is also represented based on the preset alarm degree, and in order to improve the rationality of the selection of the default value, the score value may also be corrected in combination with the preset alarm degree, for example, the correction value is determined based on the preset alarm degree. Specifically, The correction value determined based on the preset alarm degree of the main control operation screen alarm may be recorded as a fifth correction value, and the correction value determined based on the preset alarm degree of the main control auxiliary & backup panel alarm may be recorded as a sixth correction value. The preset alarm degree can be distinguished by setting the alarm color, such as purple, red, orange, green and white. In addition, when the main control operation screen alarm or the main control auxiliary & backup panel alarm respectively trigger different preset alarm degrees, the corresponding correction values can be referred to in FIG. 2. For example, when the main control operation screen alarm triggers a red alarm, the corresponding fifth correction value is -14 points, and when the main control auxiliary & backup panel alarm triggers a red alarm, the corresponding fifth correction value is -8 points.

As shown in FIG. 2, the control equipment alarm may comprise a plurality of types of sub-control equipment alarm functions and a plurality of second score values respectively corresponding to different types of sub-control equipment alarm functions after being triggered. The types of each sub-control equipment alarm functions may comprise instrument control alarm and parameter fault display. The second score value can be determined according to the alarm effectiveness of each sub-control equipment alarm function. For example, the second score value is -10 points when an instrument control alarm is triggered, and the second score value is also -10 points when a parameter fault display is triggered.

As shown in FIG. 2, the local failure alarm comprises a plurality of types of sub-local failure alarm functions and a plurality of third score values respectively corresponding to different types of sub-local failure alarm functions after being triggered. The types of sub-local failure alarm function may include audible & visual alarm, audible alarm only, and visual alarm only. The third score values can be determined according to alarm effectiveness of each sub-local failure alarm function, for example, the third score value is -15 points when an audible & visual alarm is triggered, -5 points when an audible alarm is triggered, and -15 points when a visual alarm is triggered.

As shown in FIG. 2, the failure auxiliary determination may comprise a plurality of types of sub-failure auxiliary determination functions and a plurality of fourth score values respectively corresponding to different types of sub-failure auxiliary determination functions when being triggered. The types of sub-failure auxiliary determination functions may comprise redundant instrument-assisted determination, other-type instrument/parameter-assisted determination, and hybrid determination using both redundant and other-type instruments/parameters. The fourth score value can be determined according to the triggering category of each sub-failure auxiliary determination function. For example, the fourth score value is -10 points when a hybrid determination using both redundant and other-type instruments/parameters is triggered, the fourth score value is -5 points when a redundant instrument-assisted determination is triggered, and the forth score value is -2 points when another-type instrument/parameter-assisted determination is triggered. It should be noted that the failure auxiliary determination refers to that after the control signal fails, the control system of the nuclear power plant can determine whether the control signal fails through other status signals or other measuring instrument signals. For example, the heater is heating but the temperature does not change, and the liquid degree rises but the pressure gauge does not change.

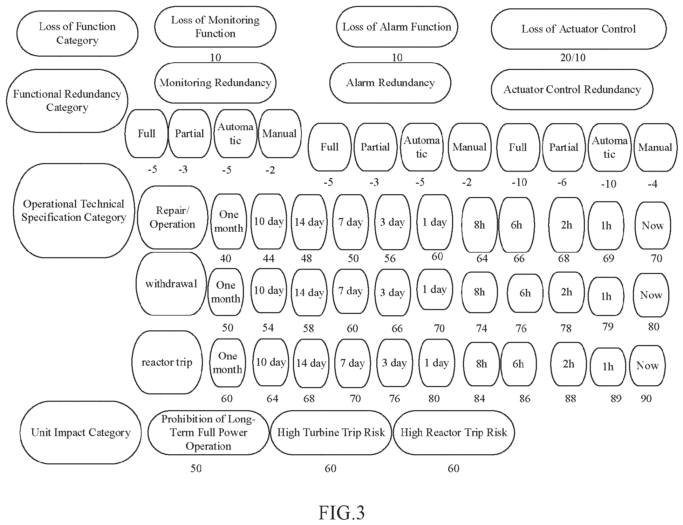

The function impact list comprises a plurality of function control types that are separately executed at the associated default values. Further, as shown in FIG. 3, the types of function control types comprise a loss of function category, a function-replacement category, an operational-technical-specification category, and a unit-impact category.

As shown in FIG. 3, the loss of function category may comprise a plurality of types of sub-loss of function categories and a plurality of fifth score values corresponding to each of the sub-loss of function categories when being triggered. The types for each sub-loss of function category comprise loss of monitoring function, loss of alarm function and loss of actuator control function. The fifth score value can be determined according to the impact degree on the operation of the nuclear power plant after each sub-loss of function category. For example, the fifth score value is 10 points when the loss of monitoring function is triggered, 10 points when the loss of alarm function is triggered, and 20 points or 10 points when the loss of actuator control function is triggered. The fifth score value corresponding to the loss of actuator control function can be determined by the impact degree after the loss of actuator function.

As shown in FIG. 3, the function-replacement categories comprise a plurality of types of sub-function-replacement categories and a plurality of sixth score values respectively corresponding to each sub-function-replacement category when different preset replacement types are triggered. The types of sub-function-replacement categories may comprise monitoring function-replacement, alarm function-replacement, and actuator function-replacement. The sixth score value is determined according to the impact degree of each sub-function-replacement category on the operation of the nuclear power plant after being triggered as well as its preset replacement type (including full replacement, partial replacement, automatic replacement and manual replacement). For example, the sixth score value of full, partial, automatic and manual replacement when monitoring function-replacement being triggered are -5, -3, -5 and -2 points in turn. The sixth score values of full, partial, automatic and manual replacement when the alarm function being triggered are -5, -3, -5 and -2 points in turn, and the sixth score values of full, partial, automatic and manual replacement when the actuator function being triggered are -10, -6, -10 and -4 points in turn.

As shown in FIG. 3, the operational-technical-specification category may comprise a plurality of types of sub-operational-technical-specification categories and a plurality of seventh score values corresponding to each sub-operational-technical-specification category when different impact durations are triggered. The types of each sub-operational-technical-specification category may comprise repair/operation mode, withdrawal mode, and reactor trip mode. The seventh score value can be determined according to the mode and impact duration on the operation of the nuclear power plant after each sub-operational-technical-specification category being triggered, for example, the seventh score value is 40 points when the repair/operation mode is triggered with a 1-month impact duration, the seventh score value is 50 points when the withdrawal mode is triggered with a 1-month impact duration , The seventh score value is 60 points when the reactor trip mode is triggered with a 1-month impact duration. The specific setting of other seventh score value can be referred to FIG. 3.

As shown in FIG. 3, the unit impact categories comprise a plurality of types of sub-unit impact categories and a plurality of eighth score values corresponding to different types of sub-unit impact categories when triggered. The types of each sub-unit impact comprise prohibition of long-term full-power operation, high turbine trip risk and high reactor trip risk. Specifically, the eighth score value can be determined according to the impact degree of each sub-unit impact category on the operation of the nuclear power plant after the alarm is triggered. For example, the eighth score value is 50 points when the prohibition of long-term full-power operation is triggered, 60 points when the high turbine trip risk is triggered, and 60 points when the high reactor trip risk is triggered.

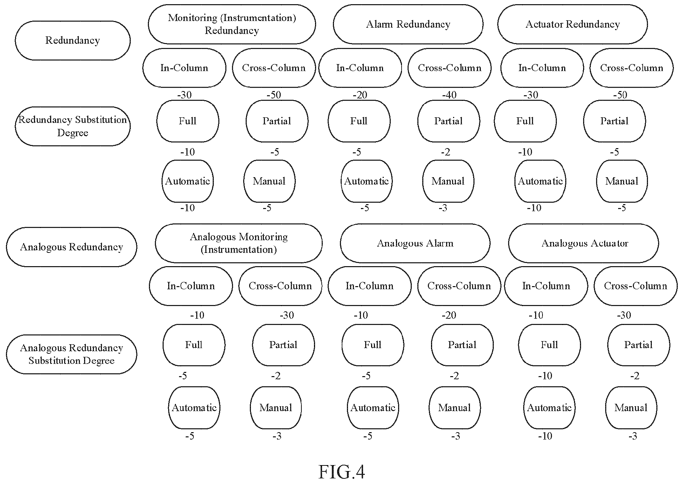

The redundancy replacement list comprises a plurality of redundant replacement categories that are triggered separately at the associated default values. Further, as shown in FIG. 4, the types of the redundancy replacement categories comprise redundancy category, redundancy replacement degree, analogous redundancy category, and analogous redundancy replacement degree.

As shown in FIG. 4, the redundancy category may comprise a plurality of types of sub-redundancy categories and a plurality of ninth score values corresponding to each of the sub-redundancy categories when different redundancy replacement forms are triggered. The types of sub-redundancy categories may comprise monitoring instrument redundancy, alarm redundancy, and actuator redundancy. The ninth score value can be determined according to the redundancy replacement form (including in-column replacement and cross-column replacement) of each sub-redundancy category when triggered. For example, for monitoring instrument redundancy, the ninth score value for in-column replacement and cross-column replacement are -30 points and -50 points respectively. For alarm redundancy, the ninth score values for in-column replacement and cross-column replacement are -20 points and -40 points respectively, and for actuator redundancy, the ninth score values for in-column replacement and cross-column replacement are -30 points and -50 points respectively. It should be noted that "in-column replacement" means that the redundant instrument and the instrument being replaced are powered by the same power supply column, and "cross-column replacement" means that the redundant instrument and the instrument being replaced are powered by different (redundant) power supply columns.

As shown in FIG. 4, the redundancy replacement degree comprises a plurality of types of sub-redundancy replacement degrees corresponding to each sub-redundancy category one by one, and a plurality of tenth score values corresponding to different sub-redundancy categories and sub-redundancy replacement degrees respectively when triggered. The types of each sub-redundancy replacement degree may comprise full redundancy replacement, partial redundancy replacement, automatic redundancy replacement, and manual redundancy replacement. The tenth score value can be determined according to the sub-redundancy replacement degree of each sub-redundancy category when triggered, for example, for the sub-redundancy replacement degree of the monitoring instrument redundancy the tenth score values of full redundancy, redundant part, redundant automatic and redundant manual replacement are -10, -5, -10 and -5 points in turn, For the sub-redundancy replacement degree of alarm redundancy, the tenth score values of full redundancy, redundant part, redundant automatic and redundant manual replacement are -5, -2, -5 and -3 points in turn . For the sub-redundancy replacement degree of actuator redundancy, the tenth score values of full redundancy, redundant part, redundant automatic and redundant manual replacement are -10, -5, -10 and -5 points in turn.

It should be noted that "full replacement" and "partial replacement "respectively indicate the degree of functional replacement, while" automatic redundancy replacement "and" manual redundancy replacement" respectively indicate the execution mode of functional replacement.

As shown in FIG. 4, the analogous redundancy category comprises a plurality of types of sub-analogous redundancy categories and a plurality of eleventh score values respectively corresponding to each sub-analogous redundancy category when different redundancy replacement forms are triggered. The type of each sub-analogous redundancy category comprises analogous monitoring instrument redundancy, analogous alarm redundancy and analogous actuator redundancy. The eleventh score value is determined according to the redundancy replacement form (including in-column replacement and cross-column replacement) of each sub-analogous redundancy category when triggered. For example, the eleventh score value of in-column replacement and cross-column replacement of analogous monitoring instrument redundancy is -10 points and -30 points respectively. The eleventh score values of in-column replacement and cross-column replacement of the analogous alarm redundancy are -10 points and -20 points respectively, and the eleventh score values of in-column replacement and cross-column replacement of the analogous actuator redundancy replacement are -10 points and -30 points respectively.

As shown in FIG. 4, the analogous redundancy replacement degree comprise a plurality of types of sub-analogous redundancy replacement degrees corresponding to each sub-analogous redundancy category one by one, and a plurality of twelfth score values respectively corresponding to different sub-analogous redundancy categories and sub-analogous redundant replacement degrees when triggered. The types of each sub-analogous redundancy replacement degree comprise full analogous redundancy replacement, partial analogous redundancy replacement, automatic analogous redundancy replacement, and manual analogous redundancy replacement. The twelfth score value can be determined according to the sub-analogous redundancy replacement degree of each sub-analogous redundancy category when it is triggered, for example, the twelfth score value of the sub-analogous redundancy replacement level of the analogous monitoring instrument redundancy is -5, -2, -5 and -3 points for the full redundancy, partial redundancy, automatic redundancy and manual redundancy replacement respectively. The twelfth score value of the sub-analogous redundancy replacement degree of the analogous alarm redundancy are -5, -2, -5, and -3 points for full redundancy, partial redundancy, automatic redundancy, and manual redundancy replacement respectively. The twelfth score values of the sub-analogous redundancy replacement degree of the analogous actuator redundancy are -10, -2, -10, and -3 points for full redundancy, partial redundancy, automatic redundancy, and manual redundancy replacement.

It should be noted that the above redundancy replacement types are parallel, such as a design with cross-column redundancy and automatic replacement and full replacement and analogous redundancy, which has the highest degree of redundancy and high safety. Process alarm, control equipment alarm, local failure alarm and failure auxiliary determination in the nuclear power plant all belong to the existing functions of the nuclear power plant control system, and the alarm or determination triggered by different control signals can be different.

Step S20 comprises: performing impact analysis processing on each preset default value respectively according to the failure associated data to obtain detection difficulty score, impact severity score and redundancy degree score; Wherein, the detection difficulty score the impact severity score and the redundancy degree score can respectively represent the difficulty of detecting target signal failure, the degree of impact on the control system (nuclear power plant control system)and the replace ability degree after failure. In this step, under a setting preset default value, the preset default value is more valid when the failure of the target signal is easier to be found, the impact on the control system is lower, and the replacement degree is higher, which is more conducive to maintaining stable and safe operation of the control system.

In some embodiments, the impact analysis processing in step S20 may comprise performing S201, S202, and S203 after each confirmation of default value of the target signal is determined as the corresponding preset default value.

Step S201 comprises determining an alarm function type triggered by the target signal after failure based on a currently set default value and an alarm function list, so as to determine a detection difficulty score according to all the triggered alarm function types. In this step, when the target signals are set to different default values, the types of the alarm functions triggered after failure may be different, so this step first sets a preset default value according to the type of the target signal and the currently set default value thereof, assumes that the target signal fails, and determines the type of the alarm function triggered by the target signal after failure. The detection difficulty score is then calculated based on all of the types of alarm functions that are triggered.

In some embodiments, the detection difficulty score may be determined in the following manner: the total score of all triggered alarm function types is calculated according to the triggered alarm function types and their corresponding scores, which is recorded as the total alarm function score; Correcting the total alarm function score: adding a first correction value to the total alarm function score if the number of triggered alarm function types is two; adding a second correction value to the total alarm function score if the number of triggered alarm function types is three or more; adding a third correction value to the total alarm function score if the degree of process alarm is a first safety class; adding a fourth correction value to the total alarm function score if the preset safety degree of the process alarm is a second safety class. A first preset standard score is added to the corrected total alarm function score to obtain a first calculation result, and judging whether the first calculation result is lower than 0, if so, the detection difficulty score is set to 0, otherwise, the detection difficulty score is set to the first calculation result. Optionally, the first correction value is -10 points, the second correction value is -20 points, the third correction value is -10 points, the fourth correction value is -5 points, and the first preset standard score is 99 points. Taking the failure of the third-stage seal standpipe low-low degree signal (i.e. RCP122LN signal) as an example, it is assumed that when the default value of RCP122LN signal is set to "1", the main control operation screen alarm will be triggered, and the instrument control alarm and parameter fault display will also be triggered, but no main control auxiliary & backup panel alarm or failure auxiliary determination is triggered. Refer to the score design scheme in FIG. 2. It can be seen that the first score value is -40 points when the main control operation screen alarm being triggered, and the second score value is -10 points when instrument control alarm and parameter fault display being triggered. Since the process alarm and control equipment alarm are triggered at the same time, the first correction value (-10 points) shall be added. And the safety degree of RCP122LN signal is neither the first safety class nor the second safety class (that is, there is no safety class), so the total alarm function score after correction is -70 points; Next, the first calculation result obtained by summing the first preset standard score (99 points) and the total alarm function score (-70 points) is 29 points, that is, when the preset default value is "1", the detection difficulty score of the RCP122LN signal is 29 points; It is assumed that the default value of RCP122LN signal is set to "0", which no main control operation screen alarm is triggered, but the instrument control alarm and parameter fault display being triggered, and no main control auxiliary & backup panel alarm, or failure auxiliary determination is triggered, the process alarm and control equipment alarm being triggered at the same time. Therefore, refer to the score design scheme in FIG 2. It can be calculated that the detection difficulty score corresponding to the RCP122LN signal is 49 points.

In order to improve the rationality of default value selection, the score may also be corrected by incorporating a preset alarm degree. In some embodiments, the correction of the total alarm function score in step S201 may further comprise: determining a fifth correction value according to a preset alarm degree of the main control operation screen alarm if the main control operation screen alarm is triggered, and adding the fifth correction value to the total alarm function score, determining a sixth correction value according to a preset alarm degree of the main control auxiliary & backup panel alarm if the main control auxiliary & backup panel alarm is triggered, and adding the sixth correction value to the total alarm function score. Taking RCP122LN signal failure as an example, since the preset alarm degree of the main control operation screen alarm is yellow (the fifth correction value is -6 points), during the correction process, -6 points shall be added to the total alarm function score, that is, the total alarm function score after correction is -56 points, so when the preset default value is "1", The RCP122LN signal was finally calculated to have a detection difficulty score of 23 points. In the same way, when the preset default value is "0", the final calculated detection difficulty score of RCP122LN signal is 43 points.

It should be noted that a lower detection difficulty score indicates that the target signal failure is more easily detectable, Furthermore, in order to better represent the detect ability degree of target signal failures, the detection difficulty score may also be classified into detection difficulty degrees based on the detection difficulty score, for example, the ten digit of the detection difficulty score may be used as the detection difficulty classification degree, that is, when the detection difficulty score is 23 points, its corresponding classification degree is Degree 2.

In order to improve analysis efficiency, in some embodiments, after step S201, it may further comprise: determining whether the detection difficulty score exceeds a recommended abandonment value, and if yes, generating a recommendation prompt signal. The recommended abandonment value may be set to 40 points. When the detection difficulty score is higher than the recommended abandonment value, it indicates high detection difficulty for the target signal failure, that is, there is a higher safety risk under the current preset default value, so a recommendation prompt signal is output to advise the operator to abandon further analysis or setting of the preset default value.

Step S202 comprises: determining a function control type triggered after the target signal failure based on the currently set default value and a function impact list, so as to determine the impact severity score according to all triggered function control types. In this step, when the target signals are set to different default values, the triggered function control types after failure may be different, so this step first sets a preset default value according to the type of the target signal and the currently set default value thereof, and assumes that the target signal fails, so as to determine the triggered function control type after the target signal failure. Then the impact severity score can be calculated according to all triggered function control types.

In some embodiments, the impact severity score may be determined as follows: calculating the total score of all triggered function control types according to the triggered function control types and their corresponding score, and recording as the total functional control score; determining whether the total functional control score is lower than 0 point, and if yes, setting the impact severity score to 0; And determining whether the total function control score is not lower than 0 point and not higher than a second preset standard score, if yes, setting the impact severity score to the total function control score, and determining whether the total function control score is higher than a second preset standard score, if yes, setting the impact severity score to the second preset standard score. Optionally, the second preset standard score is 99 points.

In some embodiments, a total score for a function control type may be calculated by: determining the sum of fifth score value based on the triggered sub- loss of function categories; determining the sum of sixth score value based on the triggered sub-function-replacement categories and their corresponding preset replacement types; determining the sum of seventh score value based on the triggered sub-operational-technical-specification category and their corresponding impact durations; determining the sum of eighth score value based on the triggered sub-unit-impact category; and calculating the sum of fifth score values, the sum of sixth score values, the sum of seventh score values and the sum of eighth score values score to obtain the total score of the function control type. Taking RCP122LN signal failure as an example, if the preset default value is "1", the loss of monitoring function and loss of actuator control function in the loss of function category will be triggered, but the alarm function will not be lost. The function-replacement category (i.e., the sum of the sixth score value is 0), the operational-technical-specification category (i.e., the sum of the seventh score value is 0), and the unit-impact category (i.e. the sum of the eighth score value is 0) are also not triggered. Referring to FIG. 2, the first fifth score value is 10 points (loss of monitoring function).Since the RCP122LN signal under this preset default value, the actuator failure impact is moderate (although the water replenishment cannot be controlled, the water replenishment function cannot be stopped, and although there is an overflow analysis, the safety impact is relatively low), the second fifth score value is 10 points, and the sum of the fifth score values is 20 points, that is, the impact severity score is determined to be 20 points; Similarly, when the preset default value is "0", since the loss of monitoring, loss of alarm and loss of actuator control functions in the loss-of function-category are triggered, and the function-replacement category and the operational-technical-specification category are not triggered, according to Fig. 2, the first fifth score value is 10 points (loss of monitoring function), and the second fifth score value is 10 points (loss of alarm function). Since the failure of the actuator corresponding to the RCP122LN signal has a significant impact, it has been assigned a third fifth score value of 20 points, Consequently, the impact severity score is determined to be 40 points. It should be noted that a lower impact severity score indicates that the failure of the target signal has a lesser effect on the control system.

Step S203 comprises: determining the type of redundancy replacement triggered after the failure of the target signal based on the currently set default value and a redundancy replacement list, so as to determine the redundancy degree score according to all triggered redundancy replacement types. In this step, when the target signal is set to different default values, the triggered redundancy replacement types after failure may be different, therefore this step first sets a preset default value according to the type of the target signal and the currently set default value thereof, and assumes that the target signal fails, so as to determine the triggered redundancy replacement type of the target signal after failure. Redundancy degree score can then be calculated based on all of the triggered redundancy replacement types.

In some embodiments, the redundancy degree score may be determined as follows: the total score of all triggered redundancy replacement types is calculated according to the triggered redundancy replacement types and their corresponding scores, and is recorded as the total redundancy degree score; Correcting the total redundancy degree score: if the number of triggered redundancy categories is two, adding a seventh correction value to the total redundancy degree score; if the number of triggered redundancy categories is three or more, adding an eighth correction value to the total redundancy degree score ; And adding a third preset standard score and the corrected total redundancy degree score to obtain a third calculation result, and determining whether the third calculation result is lower than 0, if yes, setting the redundancy degree score to 0 point, otherwise, setting the redundancy degree score to the third calculation result. Optionally, the seventh correction value is -20 points, the eighth correction value is -30 points, and the third preset standard score is 99 points.

In some embodiments, the total score of the redundancy replacement type may be calculated by: determining the sum of the ninth score values based on each triggered sub-redundancy category and the corresponding redundancy replacement form; determining the sum of the tenth score values based on each triggered sub-redundancy category and the corresponding sub-redundancy replacement degree; Determining the sum of the eleventh score values based on each triggered sub-analogous redundancy category and the corresponding redundancy replacement form; determining the sum of the twelfth score values based on each triggered sub-analogous redundancy category and the corresponding sub-analogous redundancy replacement degree; And calculating the sum of the ninth score values, the sum of the tenth score values, the sum of the eleventh score values and the sum of the twelfth score values to obtain the total score of the redundancy replacement type. Taking RCP122LN signal failure as an example, since RCP122LN signal has no redundancy function in a nuclear power plant temporarily, the total score of redundancy degree is 0. When the default value is "1"or"0", the value of redundancy degree score is set to 99.It should be noted that a lower redundancy degree score indicates a higher redundancy degree of the target signal after failure. In addition, the alarm function, the function control and the redundancy replacement type triggered by the target signal after the failure can be simulated and set to a preset default value through the existing nuclear power plant control system simulation platform (e.g., a DCS simulation platform), and the failure of the target signal is controlled to obtain a plurality of correspondingly triggered alarm function types, a plurality of function control types and a plurality of redundancy replacement types.

The step S30 comprises: determining a total score respectively corresponding to each preset default value according to the detection difficulty score, the impact severity score and the redundancy degree score respectively corresponding to each preset default value, and determining a configurable default value for the target signal according to all the total scores. The implementation of the step can help operators to reasonably evaluate the rationality of each preset default value of the control signal, recommending the most appropriate preset default value as the recommended default value; this process significantly enhances the safety and reliability of nuclear power plants.

In some embodiments, the total score respectively corresponding to each preset default value may be may be calculated using the following expression: I = A1 * I1 + A2 * I2 + A3 *I3, wherein I represents the total score; A1 represents a first weighting factor; I1 represents the detection difficulty score corresponding to the preset default value; A2 represents a second weighting factor; I2 represents the impact severity score corresponding to the preset default value; A3 represents a third weighting factor, and I3 represents the redundancy degree score corresponding to the preset default value. Optionally, the first weighting factor A1 is 1, the second weighting factor A2 is 1.2, and the third weighting factor A3 is 0.6. Due to conservativeness degree or operational objectives, the first to third weighting factors may be adjusted appropriately according to differences in nuclear technology approaches discipline-specific requirements between nuclear island and conventional island systems. Of course, the first to third weighting factors can also be custom-configured according to the actual detection difficulty, impact severity and redundancy degree of the target signal.

In some embodiments, determining a configurable default value for the target signal based on all the total scores may comprise step S301, step S302, and step S303.

The step S301 comprises: performing a conservativeness assessment analysis on each total score to obtain a respective conservativeness analysis result corresponding to each total score, wherein the conservativeness analysis result comprises being conservative, being intermediate, or being non-conservative. In this step, a lower total score indicates a higher likelihood of falling within the non-conservative range. Further, the conservativeness assessment analysis may include: determining the corresponding interval of a total score according to the range of the total score, wherein the intervals comprises a conservative range, an intermediate range, and a non-conservative range; if the total score falls within the conservative range, determining that the conservativeness analysis result of the total score is conservative; if the total score falls within the intermediate range, determining that the conservativeness analysis result of the total score is intermediate; If the total score falls within the non-conservative range, determining that the conservativeness analysis result of the total score is non-conservative. Optionally, the non-conserved range is from 0 to 99, the intermediate range is from 99 to 198, and the conservative range is from 198 to 297.

Step S302 comprises: determining a preset conservativeness type according to a preset default value corresponding to the total score, wherein the preset conservativeness type comprises conservative, intermediate, and non-conservative. In this step, the preset conservativeness type may be set in advance by an operator for the target signal.

Step S303 comprises: if the preset conservativeness type corresponding to a preset default value is consistent with the conservativeness analysis result of the corresponding total score, determining that the preset default value is valid, so as to use the preset default value as a configurable default value. In this step, if the preset conservativeness type corresponding to a preset default value matches the conservativeness analysis result obtained by performing conservativeness assessment analysis on the total score of the preset default value, it indicates that the preset default value is validity, Consequently, the system permits setting this preset default value as the default value for the corresponding control signal, thereby qualifying it as a configurable default value..

Since the same target signal can be set to different default values, different default values may also be valid. In order to determine the optimal default value, in some embodiments, the method for determining a default value of signal of the nuclear power plant control system further comprises: S40. If the number of configurable default values exceeds one, calculating for each configurable default value the absolute difference between its total score and the median value of its corresponding conservativeness range, then select the configurable default value with the minimum difference as the optimal default value. Taking the RCP122LN signal as an example, when the preset default value is "1", the calculated total score A is 106.4 (equal to 1 * 23 + 1.2 * 20 + 0.6 * 99), and the preset default value is valid; When the preset default value is "0", the calculated total score B is 150.4 (1 * 43 + 1.2 * 40 + 0.6 * 99), but the preset default value is not invalid; when the preset default value is "last valid value", the calculated total score C is 128.4, and the preset default value is valid. However, the absolute deviation between total score A and the midpoint of its assigned interval (non-conservative range, 99 to 198) is 42.1, whereas absolute deviation between total score C and the midpoint of its assigned interval (non-conservative region, 99 to 198) is 12.1, so it is finally determined that the "last valid value" is the optimal default value. It can be understood that this embodiment is operates to determining the validity of each preset default value for the target signal according to the total score, and designate the most validity default value as the recommended default value (hereinafter "optimal default value"), which can enhance fault tolerance in default value selection and improve operational rationality.

In some embodiments, the method for determining default values of signals in a nuclear power plant control system further comprises: S50, setting a target signal in the control system as to a default value, simulating a failure of the target signal, and determining whether the executed field actions of the control system conform to the failsafe state corresponding to the default value; If not, it is determined that the configurable default value is set as non-conservative, and the configurable default value is required to be reconfirmed by the personnel. In that embodiment, the configurable default value of the target signal is set in the control system and is verify by an operator on site, so that the configurable default value is ensure to be safe and reliable.

The present invention also provides a terminal equipment, comprising a memory, a processor, and a computer program which is stored in the memory and can be run on the processor. When the processor executes the computer program, the steps of method for determining a default value of signal of nuclear power plant control system provided by the present invention are realized.

It can be understood that the above embodiments only represent the preferred embodiments of the present invention, and the description is more specific and detailed, but it should not be understood as limiting the patent scope of the present invention; It should be noted that, for those of ordinary skill in the art, the above technical features can be freely combined, and a plurality of modifications and improvements can be made without departing from the concept of the present invention, which all fall within the scope of protection of the present invention; Accordingly, it is intended that all changes and modifications which come within the scope of the appended claims shall be construed accordingly.

## Claims

1. A method for determining a default value of signal of nuclear power plant control system, comprising:
S10: acquiring at least one preset default value of a target signal and failure associated data capable of representing an action corresponding executed by a control system when the target signal fails;
S20: performing impact analysis processing on each preset default value according to the failure associated data to obtain a detection difficulty score, an impact severity score and a redundancy degree score; wherein the detection difficulty score, the impact severity score and the redundancy degree score respectively represent the detection difficulty of the target signal upon failure, the impact severity on the control system and the substitutability degree;
S30: determining a total score corresponding to each preset default value according to the detection difficulty score, the impact severity score, and the redundancy degree score corresponding to each preset default value, and determining a configurable default value of the target signal according to all the total scores.

2. The method for determining a default value of signal of nuclear power plant control system according to claim 1, wherein the failure associated data comprises an alarm function list, a function impact list, and a redundancy replacement list; wherein the alarm function list comprises a plurality of alarm function types each triggered based on an associated default value, the function impact list comprises a plurality of function control types each executed based on an associated default value, and the redundancy replacement list comprises a plurality of redundancy replacement types each triggered based on an associated default value; in the step S20, performing impact analysis processing on each preset default value according to the failure associated data comprises: upon each determination of the default value of the target signal as a preset default value, performing the following steps, S201: determining an alarm function type triggered by the target signal upon failure based on a currently set default value and the alarm function list, so as to determine the detection difficulty score according to all the triggered alarm function types; S202: determining a function control type triggered by the target signal upon failure based on a currently set default value and the function impact list, so as to determine the impact severity score according to all triggered function control types; S203: determining a redundancy replacement type triggered by the target signal upon failure based on a currently set default value and the redundancy replacement list, so as to determine the redundancy degree score according to all triggered redundancy replacement types.

3. The method for determining a default value of signal of nuclear power plant control system according to claim 2, wherein the alarm function type comprises process alarm, control equipment alarm, local failure alarm and failure auxiliary determination; the process alarm comprises a plurality of types of sub-process alarm functions and a plurality of first score values respectively corresponding to different types of sub-process alarm functions when the sub-process alarm function is triggered or not triggered, and the control equipment alarm comprises a plurality of types of sub-control equipment alarm functions and a plurality of second score values respectively corresponding to different types of the sub-control equipment alarm functions after being triggered; the local failure alarm comprises a plurality of types of sub-local failure alarm functions and a plurality of third scored values respectively corresponding to different types of sub-local failure alarm functions after being triggered; and the failure auxiliary determination comprises a plurality of types of sub-failure auxiliary failure determination functions and a plurality of fourth score values respectively corresponding to different types of sub-failure auxiliary determination functions after be triggered.

4. The method for determining a default value of signal of nuclear power plant control system according to claim 3, wherein the determine the detection difficulty score according to all the triggered alarm function types comprises: calculating a total score of all the triggered alarm function types according to all the trigger alarm function types and their corresponding scores; recording as the total alarm function score, correcting the total alarm function score as follows: adding a first correction value to the total alarm function score if the number of triggered alarm function types is two, adding a second correction value to the total alarm function score if the number of triggered alarm function types is three or more, adding a third correction value to the total alarm function score if the degree of process alarm is a first safety degree, adding a fourth correction value to the total alarm function score if the preset safety degree of the process alarm is a second safety degree; and adding a first preset standard score to the corrected total alarm function score to obtain a first calculation result, and judging whether the first calculation result is lower than 0, if so, setting the detection difficulty score to 0, otherwise, setting the detection difficulty score to the first calculation result.

5. The method for determining a default value of signal of nuclear power plant control system according to claim 4, wherein the types of each sub-process alarm function comprise main control operation screen alarm and main control auxiliary & backup panel alarm; the types of each sub-control equipment alarm function comprise instrument control alarm and parameter fault display; the types of each sub-local failure alarm function comprise audible and visual alarm, audible alarm and visual alarm; the types of each sub-failure auxiliary determination function comprise auxiliary determination by redundant instrument, auxiliary determination by other type of instrument or parameter, and auxiliary determination by both redundant instrument and other type of instrument or parameter.

6. The method for determining a default value of signal of nuclear power plant control system according to claim 5, wherein the correcting the total alarm function score further comprises: determining a fifth correction value according to a preset alarm degree of the main control operation screen alarm if the main control operation screen alarm is triggered, and adding the fifth correction value to the total alarm function score, determining a sixth correction value according to a preset alarm degree of the main control auxiliary & backup panel alarm if the main control auxiliary & backup panel alarm is triggered, and adding the sixth correction value to the total alarm function score.

7. The method for determining a default value of signal of nuclear power plant control system according to claim 2, wherein the types of the functional control type comprise loss of function category, function-replacement category, operational-technical-specification category, and unit-impact category; the loss of function category comprises a plurality of types of sub-loss of function categories and a plurality of fifth score values respectively corresponding to each sub-loss of function category when triggered; the function-replacement category comprises a plurality of types of sub-function-replacement category and a plurality of sixth score values respectively corresponding to each sub-function-replacement category when different preset replacement types are triggered, wherein the preset replacement types comprise full replacement, partial replacement, automatic replacement and manual replacement; the operational-technical-specification category comprises a plurality of types of sub-operational-technical-specification categories and a plurality of seventh score values respectively corresponding to each sub-operational-technical-specification category based on duration of impact when triggered; and the unit-impact category comprises a plurality of types of sub-unit-impact categories and a plurality of eighth score values respectively corresponding to different sub-unit-impact categories when triggered.

8. The method for determining a default value of signal of nuclear power plant control system according to claim 7, wherein the type of each sub-loss of function category comprises loss of monitoring function, loss of alarm function and loss of actuator control function; the type of each sub-function-replacement category comprises monitoring function-replacement, alarm function-replacement and actuator function-replacement; the type of each sub-operational-technical-specification category comprises repair or operation mode, withdrawal mode and reactor trip mode; the type of each sub-unit impact category comprises prohibition of long-term full-power operation, high unit trip risk and high reactor trip risk.

9. The method for determining a default value of signal of nuclear power plant control system according to claim 8, wherein the determining the impact severity score according to all the triggered function control types comprises: calculating the total score of all the triggered function control types according to each triggered function control type and its predefined score mapping, recording as the total functional control score, judging whether the total functional control score is lower than 0, if so, setting the impact severity score to 0, judging whether total functional control score is not lower than 0 and not higher than a second preset standard score, if so, setting the impact severity score to the total functional control score and judging whether the total functional control score is higher than the second preset standard score, if so, setting the impact severity score to the second default standard score.

10. The method for determining a default value of signal of nuclear power plant control system according to claim 9, wherein the calculating the total score of all the triggered function control types according to the triggered function control types and its predefined score mapping, comprises: determining the sum of the fifth score values based on each triggered sub-loss of function category; determining the sum of the sixth score values based on each triggered sub-function-replacement category and a corresponding preset replacement type, determining the sum of the seventh score values based on each triggered sub-operational-technical-specification category and a corresponding impact duration, determining the sum of the eighth score values based on each triggered sub-unit-impact category; and calculating the sum of the fifth score values, the sum of the sixth score values, the sum of the seventh score values and the sum of the eighth score values to obtain the total score of the function control type.

11. The method for determining a default value of signal of nuclear power plant control system according to claim 2, wherein the types of the redundancy replacement type comprises redundancy category, redundancy replacement degree, analogous redundancy category and analogous redundancy replacement degree; the redundancy category comprises a plurality of types of sub-redundancy categories and a plurality of ninth score values respectively corresponding to each sub-redundancy category when different redundancy replacement forms are triggered, wherein the redundancy replacement forms comprise in-column replacement and cross-column replacement; the redundancy replacement degree comprises a plurality of types of sub-redundancy replacement degree corresponding to the sub-redundancy categories one by one, and a plurality of tenth score values respectively corresponding to different sub-redundancy categories and sub-redundancy replacement degree when being triggered; the analogous redundancy category comprises a plurality of types of sub-analogous redundancy categories and a plurality of eleventh score values respectively corresponding to the sub-analogous redundancy categories when different redundancy replacement forms are triggered; the analogous redundancy replacement degree comprises a plurality of types of sub-analogous redundancy replacement degrees which correspond to the sub-analogous redundancy categories one by one, and a plurality of twelfth score values respectively corresponding to different sub-analogous redundancy categories and sub-analogous redundancy replacement degrees when being triggered.

12. The method for determining a default value of signal of nuclear power plant control system according to claim 11, wherein the determining the redundancy degree score according to all the triggered redundancy replacement types comprises: calculating the total score of all the triggered redundancy replacement types according to each triggered redundancy replacement type and its predefined score mapping, recorded as the total redundancy degree score, correcting the total redundancy degree score as follows: adding a seventh correction value to the total redundancy degree score if the number of triggered redundancy categories is two; adding an eighth correction value to the total redundancy degree score if the number of triggered redundancy categories is three or more; and adding a third preset standard score to the corrected total redundancy degree score to obtain a third calculation result, and judging whether the third calculation result is lower than 0, if so, setting the redundancy degree score to 0, otherwise, setting the redundancy degree score to the third calculation result.

13. The method for determining a default value of signal of nuclear power plant control system according to claim 2, wherein in S30, determining a configurable default value of the target signal according to all the total scores comprises: performing conservativeness assessment for each total score to obtain a conservativeness analysis result corresponding to each total score; determining a preset conservativeness type according to a preset default value corresponding to the total score; if the preset conservativeness type corresponding to the preset default value is consistent with the conservativeness analysis result of the corresponding total score, determining that the preset default value is valid and taking the preset default value as the configurable default value, wherein the conservativeness analysis result comprises being classified as conservative, intermediate, or non-conservative; the preset conservativeness type comprise conservative, intermediate, and non-conservative.

14. The method for determining a default value of signal of nuclear power plant control system according to claim 13, further comprising: if the number of configurable default values is more than 1, respectively calculating a score difference between the total score corresponding to each configurable default value and the middle value of the interval to which the configurable default value belongs, and taking the configurable default value corresponding to the minimum score difference as an optimal default value.

15. A terminal equipment, comprising a memory, a processor, and a computer program stored in the memory and operable on the processor, wherein the processor is configured to, when executing the computer program, perform the method for determining a default value of signal of nuclear power plant control system according to any one of the claims 1 to 14.
